# EUROPÄISCHE PATENTSCHRIFT

(11) **EP 0 585 577 B1**
(45) Veröffentlichungstag und Bekanntmachung des Hinweises auf die Patenterteilung: **10.01.1996**
(21) Anmeldenummer: 93111352.6
(22) Anmeldetag: 15.07.1993
(51) Int. Cl.: F01N 3/36, F01N 3/20, F04B 9/10

(54) **Abgasanlage für eine Brennkraftmaschine eines Fahrzeugs mit einem Katalysator**
Exhaust system with a catalyst for an internal combustion engine of a motor vehicle
Système d'échappement muni d'un catalyseur pour un moteur à combustion interne d'un véhicule automobile

(30) Priorität: 04.09.1992 DE 4229595
(43) Veröffentlichungstag der Anmeldung: 09.03.1994
(73) Patentinhaber: Bayerische Motoren Werke Aktiengesellschaft, D-80788 München (DE)
(72) Erfinder: Kroiss, Hugo, D-82194 Gröbenzell (DE); Treml, Christian, D-81475 München (DE)

(56) Entgegenhaltungen:
- DE-A- 2 129 023
- DE-A- 2 234 601
- DE-A- 4 132 814
- US-A- 2 789 510
- US-A- 3 827 238

## Beschreibung

Die Erfindung bezieht sich auf eine Abgasanlage der im Oberbegriff des Patentanspruchs 1 genannten und aus der DE-OS 41 34 449 hervorgehenden Art.

Ein aus dieser Druckschrift bekannter Brenner dient dafür, den Katalysator schneller auf seine Betriebstemperatur zu bringen und besteht im wesentlichen aus einer Brennkammer und einem diese über einen Ringraum umgebenden Mantelgehäuse, in den über eine Luftzuführleitung Luft eingedrückt wird. Ferner wird der Brennstoff über eine Brennstoffleitung in die Brennkammer eingespeist und in dieser von einer Fiberglasmatte aufgesaugt und schließlich durch eine am Brenner vorhandene elektrische Zündeinrichtung verbrannt. Ein derartiger Brenner kann neben Gas zwar mit jeder brennbaren Flüssigkeit betrieben werden, üblicherweise wird jedoch hierfür der im Fahrzeug vorhandene Kraftstoff benutzt, der über die ebenfalls vorhandene Pumpe mit etwa 3 bis 4 bar in die Brennkammer eingeleitet wird. Da dieser Druck verhältnismäßig niedrig ist, entsteht in der Brennkammer eine verhältnismäßig schlechte Verbrennung. Darüber hinaus ist auch bei einem vergleichsweise niederen Förderdruck des Brennstoffs die Eigenemission des Brenners - insbesondere beim Starten der Brennkraftmaschine - relativ hoch. Natürlich ließen sich diese Nachteile durch eine sehr leistungsstarke, speziell dem Brenner zugeordnete Elektropumpe vermeiden. Diese ist jedoch nicht nur verhältnismäßig schwer und teuer, sondern erfordert auch einen zusätzlichen Druckregler und einen elektrischen Anschluß. Schließlich kann die Elektropumpe auch unangenehme Geräusche verursachen.

Aufgabe der Erfindung ist es daher, bei einer Abgasanlage der im Oberbegriff des Patentanspruchs 1 genannten Art unter Verzicht auf eine zusätzliche, speziell dem Brenner zugeordnete Pumpe eine Einrichtung vorzusehen, durch die der Brennstoff dem Brenner mit einem eine optimale Zerstäubung und Verbrennung gewährleistenden Druck zugeführt wird.

Zur Lösung der Aufgabe sind die im kennzeichnenden Teil des Patentanspruchs 1 dargelegten Merkmale vorgesehen.

Durch den erfindungsgemäß in der ersten Brennstoffleitung vorgesehenen Kraftverstärker kann der in dieser vorhandene, üblicherweise etwa 3 bar betragende Druck des Brennstoffs ohne eine zusätzliche Pumpe erheblich, nämlich auf etwa 10 bar, erhöht werden. Dabei ist ein Kraftverstärker wesentlich billiger, leichter und auch im Betriebseinsatz robuster sowie erheblich geräuschärmer als eine speziell dem Brenner zugeordnete und entsprechend starke Elektropumpe (Merkmale der Patentansprüche 1 und 2).

Zweckmäßigerweise besteht der Kraftverstärker aus einem Stufenkolben, wobei dessen großer und kleiner Kolben jeweils in einem Gehäuse längsverschiebbar ist. Dabei steht das den kleinen Kolben umgebende Gehäuse mit dem Brenner in Verbindung, so daß in diesen der Brennstoff mit dem gewünschten hohen Druck von etwa 10 bar eingeleitet wird (Merkmale des Patentanspruchs 3).

Der große Kolben des Stufenkolbens ist in einem hohlzylindrischen Aufnahmegehäuse längsverschiebbar vorgesehen, wobei an einem Endbereich über einen Ringflansch ein Führungsgehäuse zur Aufnahme des kleinen Kolbens angeordnet ist. Ferner besteht eine Ausführungsart der Erfindung darin, daß von dem den großen Kolben enthaltenden Aufnahmegehäuse im Bereich einer Stirnwand das Führungsgehäuse axial absteht, wobei in diesem ebenfalls der kleine Kolben längsverschiebbar angeordnet ist. Dabei stützt sich an der brennerseitigen Stirnwand des Aufnahmegehäuses oder des Führungsgehäuses eine mit Vorspannung gegen den großen bzw. den kleinen Kolben wirkende Druckfeder ab, durch die der Stufenkolben bei nicht vorhandener Beaufschlagung des großen Kolbens bis in den Bereich der mit der Brennstoffleitung versehenen Stirnwand des Aufnahmegehäuses verlagert wird; dabei greift der kleine Kolben stets in das Führungsgehäuse ein (Merkmale der Patentansprüche 4, 5 und 10).

Gemäß den Merkmalen der Patentansprüche 6 und 7 ist der Stufenkolben von einer mittigen Durchgangsbohrung durchsetzt, die am freien Ende des kleinen Kolbens in ein zum Führungsgehäuse hin öffnendes (beim Rückverlagern des Stufenkolbens) Rückschlagventil übergeht. Dieses besteht zweckmäßigerweise aus einer federbelasteten Kugel oder dergleichen Verschlußelement.

Nachdem sich beim Betrieb des Stufenkolbens sehr leicht eine Leckage bilden kann, wird das Aufnahmegehäuse zweckmäßigerweise innerhalb eines Kraftstoffbehälters angeordnet, wobei die Druckkammer des großen Kolbens mit einer von der Kraftstoffpumpe gespeisten Kraftstoffleitung über eine Brennstoffleitung in Verbindung steht. Dabei kann das Aufnahmegehäuse, das Führungsgehäuse und/oder der Stufenkolben aus Metall, Kunststoff oder Keramik bestehen (Merkmale des Patentanspruchs 8).

Ein Abgaskatalysator wird nach einem Kaltstart durch den Brenner üblicherweise lediglich etwa eine Minute vorgewärmt; denn hierauf wird die Betriebstemperatur des Abgaskatalysators durch den Abgasstrom aufrechterhalten. Falls jedoch der Motor kurz nach einem Kaltstart abgestellt wird, so soll zur nochmaligen - oder ggf. mehrmaligen (also in Intervallen) - Vorerwärmung des Abgaskatalysators dem Brenner jeweils erneut ein Brennstoff zugeführt werden. Dies wird durch die Ausgestaltung der Erfindung gemäß den Merkmalen der Patentansprüche 9 und 10 erreicht. Hierbei ist im großen Kolben des Stufenkolbens ein Strömungsventil bzw. in der Hochdruckkammer des Führungsgehäuses ein axial verschiebbar angeordneter Steuerring mit mindestens einer seitlichen Durchgangsöffnung vorgesehen. Durch diese Ausbildungen wird der Stufenkolben sogleich nach seiner Einschiebung erneut durch Druckmittelbeaufschlagung der innenliegenden Stirnseite des großen Kolbens und durch Federwirkung ausgeschoben, so daß erneut in die Hochdruckkammer des Führungsgehäuses ein Brennstoff einströmen kann. Dieser Vorgang kann je nach konstruktiver Ausbildung und Gestaltung des Kraftverstärkers beliebig oft wiederholt werden.

Ein Ausführungsbeispiel der Erfindung ist in der Zeichnung dargestellt und wird im folgenden erläutert. Es zeigt:
- Fig. 1: eine schematische Darstellung der Brennstoffversorgung einer Brennkraftmaschine mit teilweise dargestellter Abgasanlage und erfindungsgemäßem, dem Brenner zugeordneten Kraftverstärker,
- Fig. 2: ein Aufnahmegehäuse mit einem Stufenkolben in dessen Ausgangslage im Längsschnitt,
- Fig. 3: ein der Fig. 2 entsprechendes Aufnahmegehäuse in druckmittelbeaufschlagter Endlage des Stufenkolbens und geöffnetem Strömungsventil,
- Fig. 4: eine abgewandelte Ausführungsform eines Aufnahmegehäuses in Ausgangslage des Stufenkolbens,
- Fig. 5: das der Fig. 4 entsprechende Aufnahmegehäuse mit sich in druckmittelbeaufschlagter Endlage befindendem Stufenkolben und in Öffnungslage verlagertem Steuerring.

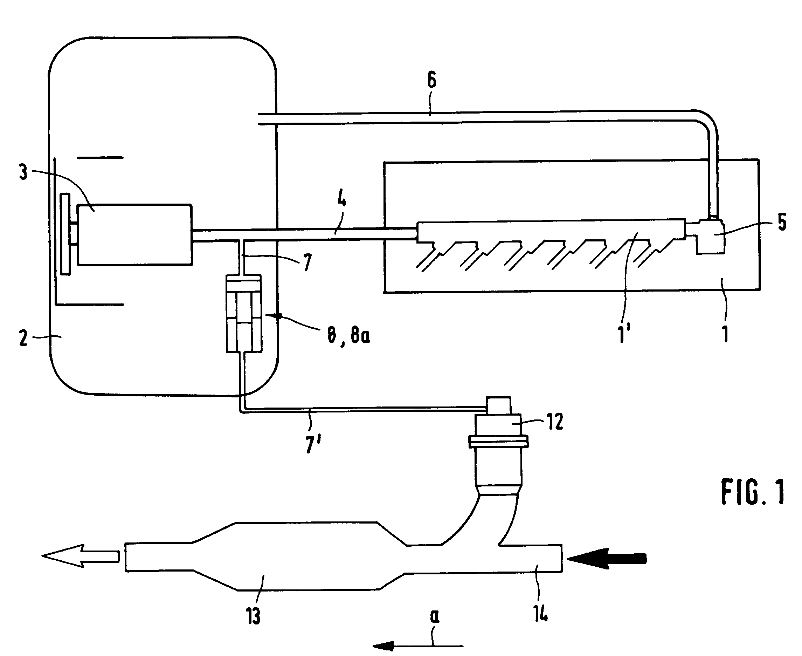

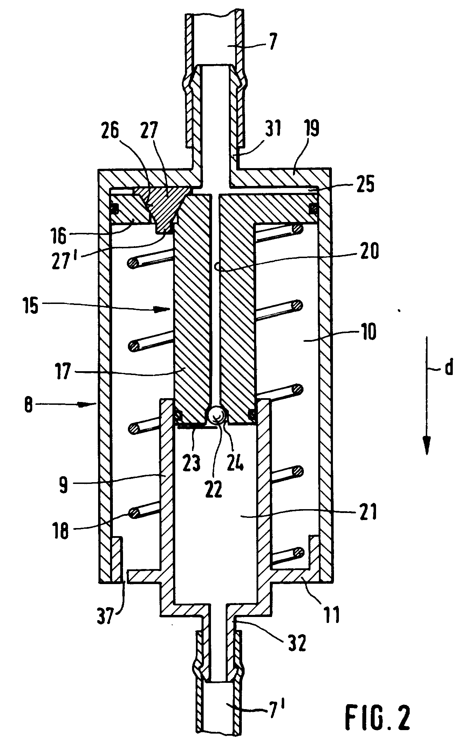

Die in Fig. 1 dargestellte Anlage zur Versorgung der Brennkraftmaschine 1 eines Personenkraftwagens mit Kraftstoff weist einen Kraftstoffbehälter 2 mit einer elektrisch betriebenen Kraftstoffpumpe 3 auf, von der der Kraftstoff über eine Vorlaufleitung 4 mit einem Systemdruck von etwa 3 bar in die Einspritzleiste 1' der Brennkraftmaschine 1 gefördert wird. Am Endbereich der Einspritzleiste 1' ist ein Druckregler 5 vorgesehen, mit dem eine Rücklaufleitung 6 in Verbindung steht, die ihrerseits in den Kraftstoffbehälter 2 einmündet. Dabei zweigt von der Vorlaufleitung 4 eine erste Brennstoffleitung 7 ab, die mit einem innerhalb des Kraftstoffbehälters 2 angeordneten, hohlzylindrischen Aufnahmegehäuse 8 in Verbindung steht. An dessen der Brennstoffleitung 7 gegenüber liegendem Endbereich ist über einen Ringflansch 11 (Fig. 2) ein hohlzylindrisches, längsverlaufendes Führungsgehäuse 9 konzentrisch befestigt, von dem eine zweite Brennstoffleitung 7' zu einem Brenner 12 führt. Dieser steht mit einem Abgaskatalysator 13 in Strömungsverbindung, der seinerseits in einer Abgasleiung 14 der Brennkraftmaschine 1 vorgesehen ist. Von dieser strömen die Abgase in Pfeilrichtung a durch den Abgaskatalysator 13. Der von der Vorlaufleitung 4 über die Brennstoffleitungen 7 und 7' sowie das Aufnahmegehäuse 8 in den Brenner 12 strömende Brennstoff (Kraftstoff) wird beim Starten der Brennkraftmaschine 1 durch eine am Brenner 12 vorgesehene, elektrische Zündeinrichtung verbrannt und dadurch der Abgaskatalysator 13 während eines Zeitraums von etwa einer Minute vorgewärmt. Hierauf wird die Betriebstemperatur des Abgaskatalysators 13 durch den Abgasstrom der Abgasleitung 14 aufrechterhalten.

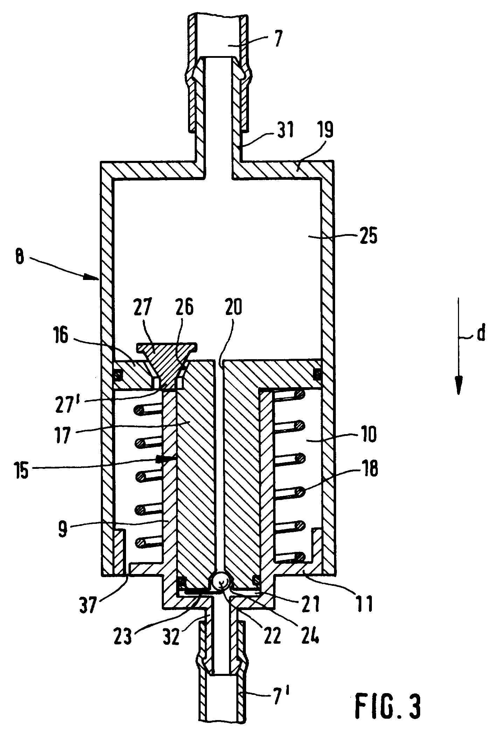

Wie in den Figuren 2 und 3 ersichtlich, ist in dem hohlzylindrischen Aufnahmegehäuse 8 der große Kolben 16 eines Stufenkolbens 15 längsverschiebbar angeordnet, wobei vom großen Kolben 16 konzentrisch ein kleiner Kolben 17 axial absteht. Dieser ist seinerseits in dem Führungsgehäuse 9 längsverschiebbar angeordnet. An dem Ringflansch 11 stützt sich eine Druckfeder 18 ab, die mit Vorspannung gegen die gegenüberliegende Stirnseite des großen Kolbens 16 wirkt. Dieser wird durch die Wirkung der Druckfeder 18 bis nahe zu der über einen Anschlußstutzen 31 mit der ersten Brennstoffleitung 7 versehenen Stirnwand 19 des Aufnahmegehäuses 8 verlagert. Ferner steht von der Stirnwand des Führungsgehäuses 9 ein Anschlußstutzen 32 ab, an dem die zweite Brennstoffleitung 7' angebracht ist. Schließlich ist der Stufenkolben 15 von einer mittigen Durchgangsbohrung 20 durchsetzt, die am freien Ende des kleinen Kolbens 17 in ein zur Hochdruckkammer 21 des Führungsgehäuses 9 hin öffnendes Rückschlagventil ausmündet. Dabei weist das Rückschlagventil eine Kugel 22 auf, die in Ruhelage durch eine an der Stirnseite des kleinen Kolbens 17 befestigte Blattfeder 23 gegen den Grund einer Ausnehmung 24 gepreßt wird, die am freien Endbereich des kleinen Kolbens 17 ausgebildet ist und in die die Durchgangsbohrung 20 einmündet.

In den Figuren 2 und 3 ist schließlich zu ersehen, daß der große Kolben 16 des Stufenkolbens 15 von einer sich zur Stirnwand 19 hin trichterförmig erweiternden Bohrung 26 durchsetzt ist, in die ein Strömungsventil 27 axial verschiebbar eingesetzt ist. Dieses liegt in Ruhelage auf der der Stirnwand 19 des Aufnahmegehäuses 8 zugewandten außenliegenden Stirnseite des großen Kolbens 16 auf (Fig. 2) und hat einen hierbei über dessen innenliegende Stirnseite hinausragenden Fortsatz 27', der im Bereich der druckmittelbeaufschlagten Endlage des großen Kolbens 16 (Fig. 3) mit der zugewandten Stirnseite des Führungsgehäuses 9 derart zusammenwirkt, daß das Strömungsventil 27 von der Bohrung 26 abgehoben wird. Durch den hierdurch zwischen dem Strömungsventil 27 und der Bohrung 26 gebildeten Ringspalt besteht zwischen der Druckkammer 25 des Aufnahmegehäuses 8 und dessen Federkammer 10 eine Strömungsverbindung.

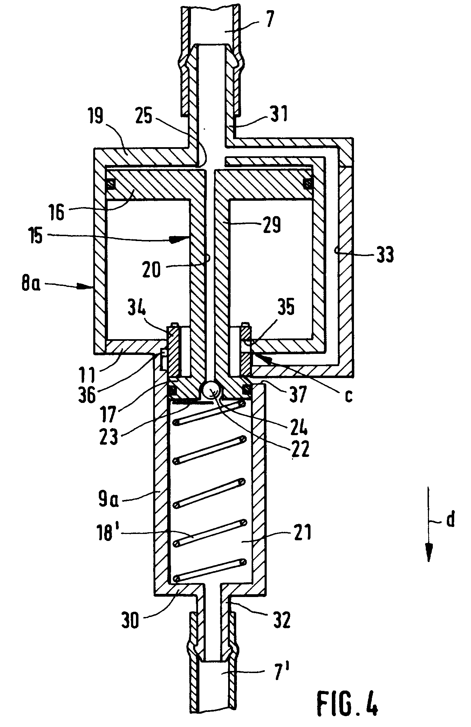

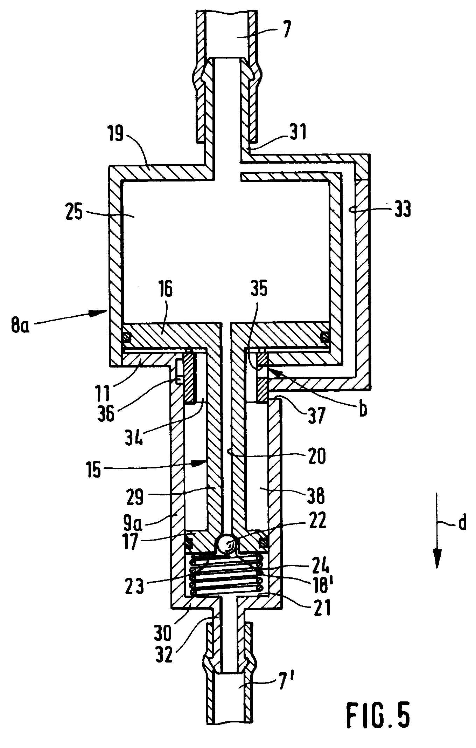

Das in den Figuren 4 und 5 dargestellte Aufnahmegehäuse 8 a ist weitgehend baugleich mit dem in den Figuren 2 und 3 erläuterten Aufnahmegehäuse 8. Daher sind jeweils gleiche Bauteile mit denselben Bezugszeichen versehen. Der kleine Kolben 17 des Stufenkolbens 15 ist jedoch an einem vom großen Kolben 16 mittig abstehenden Haltefortsatz 29 ausgebildet, der einen wesentlich kleineren Durchmesser als der kleine Kolben 17 aufweist. Von dem Ringflansch 11 des Aufnahmegehäuses 8 a steht axial nach außen das hohlzylindrische Führungsgehäuse 9 a ab, wobei sich an der dem Brenner 12 zugewandten Stirnwand 30 des Führungsgehäuses 9 a die Druckfeder 18' abstützt, die mit Vorspannung gegen den kleinen Kolben 17 wirkt. Ferner ist an der Stirnwand 30 ein Anschlußstutzen 32 für die zweite Brennstoffleitung 7' vorgesehen. Am Aufnahmegehäuse 8 a ist darüber hinaus ein Strömungskanal 33 ausgebildet, der vom Bereich der Einmündung des Anschlußstutzens 31 der ersten Brennstoffleitung 7 in den Druckraum 25 abzweigt, längs einer Seitenwandung des Aufnahmegehäuses 8 a verläuft und schließlich in die Hochdruckkammer 21 des Führungsgehäuses 9 a einmündet (in Öffnungslage b des Steuerrings 34). Ferner befindet sich im Mündungsbereich des Strömungskanals 33 ein den Haltefortsatz 29 des Stufenkolbens 15 mit großem radialem Abstand umgebender Steuerring 34, der eine radial verlaufende Durchgangsöffnung 35 aufweist.

Dabei ist der Steuerring 34 über seine Umfangswandung längs der Wandung der Hochdruckkammer 21 des Führungsgehäuses 9 a zwischen einer öffnungslage b (Fig. 5) und einer Schließlage c (Fig. 4) axial verschiebbar. Hierfür steht vom Steuerring 34 radial eine Führungsnase 36 ab, die in eine zugeordnete, längsverlaufende Ausnehmung des Führungsgehäuses 9 a eingreift. Wenn im Druckraum 25 des Aufnahmegehäuses 8 a kein Flüssigkeitsdruck vorhanden ist, so wird der große Kolben 16 des Stufenkolbens 15 durch die Wirkung der Druckfeder 18' bis nahe zur Stirnwand 19 des Aufnahmegehäuses 8 a verlagert und dadurch auch der Steuerring 34 in seine Schließlage c verlagert, in der er die Mündung des Strömungskanals 33 in die Hochdruckkammer 21 des Führungsgehäuses 9 a abdichtend überdeckt (Fig. 4). Wird jedoch der große Kolben 16 des Stufenkolbens 15 durch Druckmittelbeaufschlagung - wie im folgenden erläutert wird - in seine Endlage verlagert, so wird durch diesen auch der Steuerring 34 in seine Öffnungslage b verlagert, in der der Brennstoff über den Strömungskanal 33 und die Durchgangsöffnung 35 des Steuerrings 34 in einen Ringraum 38 des Führungsgehäuses 9 a einströmen kann, wie Fig. 5 zeigt.

Das mit dem Stufenkolben 15 versehene Aufnahmegehäuse 8 und 8 a mit Führungsgehäuse 9 und 9 a bildet einen Kraftverstärker, wobei der mit etwa 3 bar in das Aufnahmegehäuse 8 und 8 a einströmende Brennstoff auf etwa 10 bar zur Einleitung in den Brenner 12 erhöht wird. Der große Kolben 16 kann dabei beispielsweise etwa 50 mm Durchmesser aufweisen, während der kleine Kolben 17 beispielsweise etwa 20 mm Durchmesser haben kann. Schließlich kann das Aufnahmegehäuse 8 und 8 a und der Stufenkolben 15 ganz oder teilweise sowie die jeweiligen Einzelteile aus Kunststoff, Metall oder Keramik bestehen. Natürlich kann das Aufnahmegehäuse 8 auch ohne das Strömungsventil 27 bzw. das Aufnahmegehäuse 8 a ohne den Steuerring 34 ausgerüstet sein. Beim Verlagern des Stufenkolbens 15 kann schließlich der Brennstoff über eine am Aufnahmegehäuse 8 und 8 a vorgesehene Öffnung 37 in den Kraftstoffbehälter 2 abfließen.

Die Wirkungsweise des erfindungsgemäßen Kraftverstärkers ist in bezug auf die Figuren 1 bis 5 folgende:

Nach dem Starten der Brennkraftmaschine 1 wird aus dem Kraftstoffbehälter 2 durch die Kraftstoffpumpe 3 ein Kraftstoff in die Vorlaufleitung 4 eingespeist, wobei der vorhandene Druck durch den Druckregler 5 ausgeregelt wird; im vorliegenden Ausführungsbeispiel beträgt er etwa 3 bar. Gleichzeitig wird über die erste Brennstoffleitung 7 der Brennstoff (Kraftstoff) auch in die Druckkammer 25 des Aufnahmegehäuses 8 eingespeist (Fig. 2) und dadurch der große Kolben 16 des Stufenkolbens 15 gegen die Wirkung der Druckfeder 18 in Pfeilrichtung d verlagert (Fig. 3). Die Flächenverhältnisse des großen Kolbens 16 und des kleinen Kolbens 17 sind derart zueinander abgestimmt, daß der beim Verlagern des Stufenkolbens 15 gegen Pfeilrichtung d durch die Durchgangsbohrung 20 und bei geöffnetem Rückschlagventil (Kugel 22) in die Hochdruckkammer 21 eingeströmte Brennstoff - wie im folgenden erläutert wird - beim weiteren Verlagern des Stufenkolbens 15 in Pfeilrichtung d auf einen Druck von etwa 10 bar erhöht wird; mit diesem Druck gelangt der Brennstoff über die zweite Brennstoffleitung 7' schließlich in den Brenner 12. Dieser ist mit einem Temperatursensor versehen, der die zu erreichende Vorwärmtemperatur des Abgaskatalysators 13 mißt und beim Erreichen dieser Temperatur den Brenner 12 abschaltet; nach einem Kaltstart beträgt die Vorwärmzeit des Abgaskatalysators 13 je nach vorhandener Außentemperatur etwa eine Minute. Im Bereich der in Fig. 3 gezeigten druckmittelbeaufschlagten Endlage des großen Kolbens 16 befindet sich seine innenliegende Stirnseite nahe der zugewandten Stirnseite des Führungsgehäuses 9, wodurch das Strömungsventil 27 über dessen Fortsatz 27' zurückgeschoben wird, so daß sich zwischen diesem und der Bohrung 26 ein Ringspalt bildet, über den nunmehr der Brennstoff in die Federkammer 10 des Aufnahmegehäuses 8 einströmen kann. Durch den in dieser herrschenden Strömungsdruck wird der große Kolben 16 rückseitig mit Druck beaufschlagt, so daß er durch diesen und durch die Wirkung der sich entspannenden Druckfeder 18 gegen Pfeilrichtung d ausgeschoben wird und schließlich die in Fig. 2 dargestellte Endlage erreicht. Dabei wird auch das Strömungsventil 27 geschlossen. Bei diesem Vorgang, also beim Verlagern des Stufenkolbens 15 gegen Pfeilrichtung d, wird die Durchgangsbohrung 20 des Stufenkolbens 15 vom Brennstoff durchströmt und hierbei die Kugel 22 vom Grund der Ausnehmung 24 gegen die Wirkung der Blattfeder 23 abgehoben, so daß der Brennstoff in die Hochdruckkammer 21 des Führungsgehäuses 9 einströmen kann. Wird jedoch der Stufenkolben 15 erneut in Pfeilrichtung d verlagert, so wird die Kugel 22 durch die Wirkung der Blattfeder 23 und durch den in der Hochdruckkammer 21 vorhandenen Brennstoff gegen den Grund der Ausnehmung 24 gepreßt, also das Rückschlagventil geschlossen. Durch mehrmaliges Verlagern des Stufenkolbens 15 kann aus der Hochdruckkammer 21 des Aufnahmegehäuses 8 und der zweiten Brennstoffleitung 7' wiederholt Brennstoff in den Brenner 12 eingespeist werden. Dessen Temperatursensor spricht beim Erreichen der Vorwärmtemperatur des Abgaskatalysators 13 an und schließt dabei gleichzeitig das Brennstoffzufuhrventil im Brenner 12. Dadurch baut sich in der zweiten Brennstoffleitung 7' ein Flüssigkeitsrückstau auf, der bewirkt, daß der Stufenkolben 15 in seiner jeweiligen Schiebestellung im Aufnahmegehäuse 8 verbleibt. Beim Verlagern des Stufenkolbens 15 kann der Brennstoff über die Öffnung 37 aus der Federkammer 10 in den Kraftstoffbehälter 2 abfließen. Das in den Figuren 4 und 5 dargestellte Aufnahmegehäuse 8 a mit Stufenkolben 15 ist weitgehend funktionsgleich mit dem zu den Figuren 2 und 3 erläuterten Aufnahmegehäuse 8. Daher werden im folgenden lediglich die funktionellen Unterschiede beim Betrieb des Aufnahmegehäuses 8 a erläutert. Beim Einströmen des Brennstoffs über die erste Brennstoffleitung 7' in den Druckraum 25 des Aufnahmegehäuses 8 a wird der Stufenkolben 15 gegen die Wirkung der Druckfeder 18' in Pfeilrichtung d verlagert, wobei sich der Steuerring 34 in seiner Schließlage c befindet und damit der in den Strömungskanal 33 einfließende Brennstoff nicht abfließen kann. Liegt jedoch die innenliegende Stirnseite des großen Kolbens 16 auf der zugewandten Stirnseite des Steuerrings 34 auf, so wird dieser bei weiterem Verlagern des Stufenkolbens 15 in die in Fig. 5 gezeigte Öffnungslage b verlagert, so daß in der Endlage des Stufenkolbens 15 (Fig. 5) auch Brennstoff über den Strömungskanal 33 und die Durchgangsöffnung 35 in den Ringraum 38 des Führungsgehäuses 9 a einströmt. Durch den im Ringraum 38 herrschenden Druck des Brennstoffs und durch die Wirkung der sich entspannenden Druckfeder 18' wird der Stufenkolben 15 gegen Pfeilrichtung d in die in Fig. 4 dargestellte Ausgangslage zurückverlagert. Das am kleinen Kolben 17 vorgesehene Rückschlagventil (Kugel 22) wird analog wie das Rückschlagventil des Aufnahmegehäuses 8 geöffnet und geschlossen.

Falls das Aufnahmegehäuse 8 oder 8 a nicht mit dem Strömungsventil 27 bzw. mit dem Steuerring 34 versehen ist, so kann nach einem Kaltstart der Brennkraftmaschine 1 die Hochdruckkammer 21 nur einmal mit Brennstoff gefüllt werden.

## Patentansprüche

1. Abgasanlage für eine Brennkraftmaschine (1) eines Fahrzeugs, mit einem Katalysator (13), der durch einen brennstoffbetriebenen Brenner (12) vorwärmbar ist, in den der Brennstoff aus einem Brennstoffbehälter (2) über eine Pumpe (3) und eine erste Brennstoffleitung (7) eingeleitet wird, dadurch gekennzeichnet, daß der in der ersten Brennstoffleitung (7) vorhandene Druck durch einen Kraftverstärker erhöht wird.

2. Abgasanlage nach Anspruch 1, dadurch gekennzeichnet, daß der Druck des Brennstoffs in der ersten Brennstoffleitung (7) durch den Kraftverstärker auf etwa 10 bar erhöht wird.

3. Abgasanlage nach Anspruch 1, dadurch gekennzeichnet, daß der Kraftverstärker durch einen Stufenkolben (15) und ein dessen großen und kleinen Kolben (16 und 17) jeweils umgebendes Gehäuse gebildet ist, wobei das Gehäuse des kleinen Kolbens (17) mit dem Brenner (12) in Verbindung steht.

4. Abgasanlage nach Anspruch 3, dadurch gekennzeichnet, daß der große Kolben (16) des Stufenkolbens (15) in einem hohlzylindrischen Aufnahmegehäuse (8, 8a) längsverschiebbar ist, in dessen dem kleinen Kolben (17) zugewandten Endbereich ein Ringflansch (11) befestigt ist, der mit einem längsverlaufenden, den kleinen Kolben (17) aufnehmenden Führungsgehäuse (9, 9a) versehen ist.

5. Abgasanlage nach Anspruch 4, dadurch gekennzeichnet, daß sich am Ringflansch (11) des Aufnahmegehäuses (8) bzw. an der brennerseitigen Stirnwand (30) des Führungsgehäuses (9a) eine mit Vorspannung gegen den großen Kolben (16) bzw. den kleinen Kolben (17) wirkende Druckfeder (18, 18') abstützt, durch die in ihrer Ruhelage der große Kolben (16) bis in den Bereich der diesem zugewandten Stirnwand (19) des Aufnahmegehäuses (8, 8a) verlagert wird, wobei der kleine Kolben (17) in das Führungsgehäuse (9, 9a) hineinragt.

6. Abgasanlage nach Anspruch 4, dadurch gekennzeichnet, daß der Stufenkolben (15) eine mittige Durchgangsbohrung (20) aufweist, die am freien Ende des kleinen Kolbens (17) in ein zum Führungsgehäuse (9, 9a) hin öffnendes, bedarfsweise einstellbares Rückschlagventil übergeht.

7. Abgasanlage nach Anspruch 6, dadurch gekennzeichnet, daß die Durchgangsbohrung (20) des Stufenkolbens (15) in eine am freien Endbereich des kleinen Kolbens (17) ausgebildete Ausnehmung (24) ausmündet, gegen deren Grund eine Kugel (22) oder dergleichen Verschlußelement in Ruhelage federbelastet gepreßt wird.

8. Abgasanlage nach Anspruch 4, dadurch gekennzeichnet, daß das Aufnahmegehäuse (8, 8a) innerhalb eines Kraftstoffbehälters (2) vorgesehen ist, wobei die Druckkammer (25) des großen Kolbens (16) des Stufenkolbens (15) mit einer von der Kraftstoffpumpe (3) gespeisten Vorlaufleitung (4) über die erste Brennstoffleitung (7) in Verbindung steht.

9. Abgasanlage nach Anspruch 6, dadurch gekennzeichnet, daß der große Kolben (16) des Stufenkolbens (15) von mindestens einem, axial verschiebbaren Strömungsventil (27) durchsetzt ist, das in Ruhelage auf der außenseitigen Stirnseite des großen Kolbens (16) aufliegt und dabei über dessen innenliegende, dem Führungsgehäuse (9) zugewandte Stirnseite hinausragt, wobei das Strömungsventil (27) im Bereich der druckmittelbeaufschlagten Endlage des großen Kolbens (16) mit der zugewandten Stirnseite des Führungsgehäuses (9) zusammenwirkt und dabei zurückverlagert wird, wobei zwischen dem Strömungsventil (27) und einer dieses aufnehmenden Bohrung (26) ein Ringspalt entsteht.

10. Abgasanlage nach Anspruch 8, dadurch gekennzeichnet, daß
- der kleine Kolben (17) des Stufenkolbens (15) an einem vom großen Kolben (16) mittig abstehenden Haltefortsatz (29) ausgebildet ist, der einen kleineren Durchmesser hat als der kleine Kolben (17),
- der Haltefortsatz (29) des Stufenkolbens (15) mit radialem Abstand von einem längs der Wandung der Hochdruckkammer (21) des Führungsgehäuses (9a) zwischen einer öffnungslage (b) und einer Schließlage (c) verschiebbaren Steuerring (34) umgeben ist, der mindestens eine radial verlaufende Durchgangsöffnung (35) aufweist,
- das Aufnahmegehäuse (8a) mit mindestens einem Strömungskanal (33) versehen ist, der vom Bereich der Einmündung der ersten Brennstoffleitung (7) in das Aufnahmegehäuse (8a) abzweigt und in die Hochdruckkammer (21) des Führungsgehäuses (9a) in Öffnungslage (b) des Steuerrings (34) einmündet, wobei
- bei Verlagerung des großen Kolbens (16) bis nahe zu der diesem zugewandten Stirnwand (19) des Aufnahmegehäuses (8a) die Mündung des Strömungskanals (33) in die Hochdruckkammer (21) des Führungsgehäuses (9a) durch Verlagerung des Steuerrings (34) in seine Schließlage (c) überdeckt wird, während
- der Steuerring (34) bei Verlagerung des Stufenkolbens (15) in seine druckmittelbeaufschlagte Endlage vom großen Kolben (16) in seine Öffnungslage (b) verlagert wird, in der der Brennstoff über den Strömungskanal (33) und die Durchgangsöffnung (35) des Steuerrings (34) in einen Ringraum (38) des Führungsgehäuses (9a) einströmt.

## Claims

1. An exhaust system for an internal combustion engine (1) ) of a vehicle, with a catalytic converter (13), which can be pre-warmed by a burner (12), operated by means of fuel, and into which fuel is introduced from a fuel tank (2) via a pump (3) and a first fuel line (7), characterised in that the pressure in the first fuel line (7) is increased by a power booster.

2. An exhaust system according to claim 1, characterised in that the pressure of the fuel in the first fuel line (7) is increased by the power booster to approximately 10 bar.

3. An exhaust system according to claim 1, characterised in that the power booster is formed by a stepped piston (15) and a housing enveloping a large and a small piston (16 and 17), with the housing of the small piston (17) connected to the burner (12).

4. An exhaust system according to claim 3, characterised in that the large piston (16) of the stepped piston (15) can undergo longitudinal displacement in a hollow-cylindrical receiver housing (8, 8a), with a ring flange (11) secured in its end region facing the small piston (17), which is provided with a longitudinally-extending guide housing (9, 9a) accommodating the small piston (17).

5. An exhaust system according to claim 4, characterised in that a compression spring (18, 18'), acting with pre-tension against the large piston (16) or against the small piston (17), is braced against the ring flange (11) of the receiver housing (8) or against the end wall (30) of the guide housing (9a) on the burner side and by means of which in its resting position the large piston (16) is displaced into the region of the end wall (19) of the receiver housing (8, 8a), with the small piston (17) projecting into the guide housing (9, 9a).

6. An exhaust system according to claim 4, characterised in that the stepped piston (15) is provided with a central through-bore (20) which then goes on to become a non-return valve opening towards the guide housing (9, 9a) and if required adjustable at the free end of the small piston (17).

7. An exhaust system according to claim 6, characterised in that the through-bore (20) of the stepped piston (15) opens into a recess (24) formed at the free end region of the small piston (17), with a ball (22) or other such closing element spring-loaded in its resting position compressed against the base of the said recess (24).

8. An exhaust system according to claim 4, characterised in that the receiver housing (8, 8a) is arranged within a fuel tank (2), with the pressure chamber (25) of the large piston (16) of the stepped piston (15) connected via the first fuel line (7) to a pre-supply line (4) fed by the fuel pump (3).

9. An exhaust system according to claim 6, characterised in that the large piston (16) of the stepped piston (15) is penetrated by at least one axially-displaceable flow valve (27) which in a resting position lies on the outer end face of the large piston (16) and thereby projects beyond its inner-lying end face facing the guide housing (9), with the flow valve (27) working in conjunction with the facing end side of the guide housing (9) in the region of the pressure-admitting end position of the large piston (16) and is thereby displaced back, with an annular gap formed between the flow valve (27) and a hole (26) which accommodates it.

10. An exhaust system according to claim 8, characterised in that
- the small piston (17) of the stepped piston (15) is formed on a holding extension (29) extending centrally from the large piston (16), with the holding extension (29) of smaller diameter than the small piston (17),
- the holding extension (29) of the stepped piston (15) is surrounded at a radial distance by a control ring (34), displaceable along the wall of the high-pressure chamber (21) of the guide housing (9a) between an open position (b) and a closed position (c), the said control ring (34) provided with at least one radially-extending through-opening (35),
- the receiver housing (8a) is provided with at least one flow channel (33) which branches from the region of the first fuel line (7) opening into the receiver housing (8a) and opens into the high pressure chamber (21) of the guide housing (9a) in the open position (b) of the control ring (34), whereby
- upon displacement of the large piston (16) to a point close to the end wall (19) of the receiver housing (8a) facing it, the opening of the flow channel (33) into the high pressure chamber (21) of the guide housing (9a) is covered by displacement of the control ring (34) into its closed position, whilst
- the control ring (34), upon displacement of the stepped piston (15) into its pressure-admitting end position, is displaced by the large piston (16) into its open position (b), in which the fuel flows via the flow channel (33) and the through-opening (35) of the control ring (34) into an annular region (38) of the guide housing (9a).

## Revendications

1. Système d'échappement à pot catalytique, pour moteur à combustion interne (1) d'automobile, comprenant un pot catalytique (13) que peut préchauffer un brûleur alimenté en carburant amené d'un réservoir (2) par une pompe (3) à travers une première conduite de carburant (7), caractérisé en ce que la pression de carburant régnant dans cette conduite (7) est fournie par un amplificateur de pression.

2. Système selon la revendication 1, caractérisé en ce que la pression du carburant dans la première conduite (7) est élevée par l'amplificateur de pression à environ 10 bars.

3. Système selon la revendication 1, caractérisé en ce que l'amplificateur de pression est constitué d'un piston à étages (15) et de boîtiers entourant respectivement le gros et le petit piston (16, 17), le boîtier du petit piston (17) étant relié au brûleur (12).

4. Système selon la revendication 3, caractérisé en ce que le gros piston (16) du piston à étages (15) pour coulisser longitudinalement dans un boîtier de réception cylindrique creux (8, 8a) dont l'extrémité située du côté du petit piston (17) comporte une bride annulaire (1) portant un boîtier de guidage (9, 9a) dans lequel peut coulisser longitudinalement le petit piston (17).

5. Système selon la revendication 4, caractérisé en ce que sur la bride annulaire (11) du boîtier (8) et sur la face frontale (30), du côté brûleur, du boîtier de guidage (9a) respectivement, s'appuie un ressort (18, 18') tendu exerçant sa poussée sur gros piston (16) et sur le petit piston (17) respectivement, de sorte qu'en position de repos le gros piston est amené près de la face frontale (19) du boîtier (8, 8a) en face du piston, le petit piston (17) pénétrant dans le boîtier de guidage (9, 9a).

6. Système selon la revendication 4, caractérisé en ce que le piston à étages (15) est percé d'un alésage axial (20) qui, à l'extrémité libre du petit piston (17) est suivi d'une soupape anti-retour ouvrant sur le boîtier de guidage (9, 9a) et réglable au besoin.

7. Système selon la revendication 6, caractérisé en ce que l'alésage (20) du piston à étages (15) débouche dans un évidement (24) de l'extrémité libre du petit piston (17), contre le fond duquel une bille (22) ou un élément de fermeture analogue se trouve appliqué par un ressort en position de repos.

8. Système selon la revendication 4, caractérisé en ce que le boîtier de réception (8, 8a) est monté à l'intérieur d'un réservoir de carburant (2), la chambre de pression (25) du gros piston (16) du piston à étages (15) étant reliée par une première conduite de carburant (7) à une canalisation de départ (4) alimentée par la pompe à carburant (3).

9. Système selon la revendication 6, caractérisé en ce que le gros piston (16) du piston à étages (15) est traversé par au moins une soupape d'écoulement (27) coulissant axialement et qui en position de repos, s'appuie sur la face frontale tournée vers l'extérieur du gros piston (16), tout en dépassant la face interne du piston (16) tournée vers le boîtier de guidage (9), cette soupape d'écoulement (27) lorsque le gros piston se trouve sous l'action de la pression près de la position finale, entrant en interaction avec la face frontale en regard du boîtier de guidage (9), de sorte qu'elle se déplace vers l'arrière en ouvrant une fente annulaire entre la soupape d'écoulement (27) et l'alésage (26) dans lequel elle est logée.

10. Système selon la revendication 8, caractérisé en ce que :
- le petit piston (17) du piston à étages (15) est constitué d'un appendice porteur (29) faisant saillie sur le gros piston en son centre et de diamètre inférieur à celui du petit piston (17),
- l'appendice porteur (29) du piston à étages (15) est entouré à une certaine distance radiale d'une bague de commande (34) pouvant coulisser le long de la paroi de la chambre à haute pression du boîtier de guidage (9a) entre une position d'ouverture (b) et une position de fermeture (c), cette bague étant percée d'au moins un orifice de passage (35),
- le boîtier de réception (8a) est équipé d'au moins un canal d'écoulement (33) partant de la zone de l'embouchure de la première conduite de carburant (7) dans le boîtier (8a), et débouchant dans la chambre à haute pression (21) du boîtier de guidage (9a) lorsque la bague de commande (34) est en position d'ouverture,
- lorsque le gros piston (16) se déplace jusqu'à venir près de la paroi frontale (19) du boîtier (8) qui lui fait face, l'embouchure du canal d'écoulement (33) dans la chambre à haute pression (21) du boîtier de guidage (9a) se trouve obturée par la venue de la bague de commande (34) en position de fermeture tandis que,
- la bague de commande (34), par déplacement du piston à étages (15) est amené dans sa position finale par le fluide sous pression agissant sur le gros piston (16), passe en position d'ouverture (b) dans laquelle le carburant, en suivant le canal d'écoulement (33) et en traversant l'orifice de passage (35), pénètre dans une chambre annulaire (38) du boîtier de guidage (9a).
